# EUROPEAN PATENT APPLICATION

(11) **EP 3 133 253 A1**
(43) Date of publication of application: **22.02.2017**
(21) Application number: 15002447.9
(22) Date of filing: 18.08.2015
(51) Int. Cl.: F01D 15/02, B61C 5/00, F02C 3/22, F02C 7/224

(54) **GENERATOR ASSEMBLY**

(71) Applicant: Linde Aktiengesellschaft, 80331 München (DE)
(72) Inventor: Elshaug, Rhyan, VIC, 3073 (AU)
(74) Representative: Zahn, Christoph

(57) **Abstract**

The present invention relates to a generator assembly (100), comprising a skid (101) inside which components of the generator assembly (100) are arranged, at least one gas turbine (105a, 105b) arranged inside the skid (101) adapted to be by fuelled by fuel gas, especially natural gas, a fuel-inlet (102) adapted to connect the generator assembly (100) with supply means (120) storing liquefied fuel gas, transfer means (103) arranged inside the skid (101) connecting the fuel-inlet (102) with the at least one gas turbine (105a, 105b), at least one heat exchanger (104) arranged inside the skid (101) in a way that heat produced by the at least one gas turbine (105a, 105b) is transferred to the transfer means (103).

## Description

The present invention relates to a generator assembly.

### Prior art

Gas turbines can be used in generator assemblies in order to produce power. Gas turbines can comprise a compressor in which air is compressed and brought to higher pressure. A fuel gas is added to the compressed air and ignited in a combustion chamber of the gas turbine. The so produced combustion gas enters a turbine, in which it is expanded. Thermal energy is thus transduced into kinetic energy in form of a rotating shaft. The expanded combustion gas leaves the gas turbine as waste gas.

It is desirable that generator assemblies are constructed compact, with minimum space requirements, so that they can easily be assembled and brought to a desired location.

### Disclosure of the invention

The invention relates to a generator assembly and a method of operating such a generator assembly with the features of the independent claims. Further advantages and embodiments of the invention will become apparent from the description and the appended figures.

The generator assembly comprises a skid inside which components of the generator assembly are arranged. The skid is especially constructed as a frame or framework, respectively. The skid can be constructed of bars or beams, especially made of steel or metal.

At least one gas turbine is arranged inside the skid. The at least on gas turbine is adapted to be fuelled by a fuel gas, especially by natural gas. Each gas turbine particularly comprises a compressor, a combustion chamber and a turbine. Air is especially sucked into the compressor through an air-inlet, in which it is compressed. Fuel gas, especially natural gas, in its gaseous phase is added to the compressed air and ignited in the combustion chamber. The so produced combustion gas enters the turbine, in which it is expanded. Thermal energy is thus transduced into kinetic energy in form of a rotating shaft. The expanded combustion gas leaves the gas turbine as waste gas through a turbine exhaust.

The gas turbine or gas turbines is/are especially constructed as micro turbines. Each gas turbine expediently produces power between 30 kW and 1 MW. Each gas turbine can for example be constructed as a 30 kW, 60 kW, 65kW, 200 kW, 600 kW, 800 kW, or 1 MW gas turbine.

A fuel-inlet is adapted to connect the generator assembly and the skid, respectively, with supply means storing liquefied fuel gas, especially liquefied natural gas. The supply means can for example be constructed as a tank or cryogenic tank, respectively, e.g. a bullet tank.

Transfer means are arranged inside the skid connecting the fuel-inlet with the at least one gas turbine. The transfer means are especially adapted to transfer liquefied fuel gas from the fuel-inlet to the at least one gas turbine. The transfer means are for example constructed as pipes, tubes, or hoses.

At least one heat exchanger is arranged inside the skid in a way that heat produced by the at least one gas turbine is transferred to the transfer means. The at least one heat exchanger is especially adapted to transfer heat from waste gases emitted by the at least one gas turbine to the transfer means. The heat exchanger can especially be constructed as a plate and shell (two stage) exchanger. By the heat transferred to the transfer means liquefied fuel gas inside the transfer means can be heated and especially vaporised. Thus, it can be ensured that the fuel gas is fed into the at least one gas turbine in its gaseous phase at the specified temperature and not in its liquid phase.

Preferably, the transfer means are arranged to pass through the heat exchanger(s), whereby heat is indirectly exchanged between the waste gases and the fuel. Waste gases emitted from the at least one gas turbine, for example out of a vent, can at least partly be transferred from the at least one gas turbine and the corresponding vent, respectively, to the at least one heat exchanger. The waste gases can be transferred through the heat exchanger and can afterwards be emitted by another vent to atmosphere or for further heating utilisation.

The invention further relates to a method of operating a generator assembly. Advantages and embodiments of this method as well as the generator assembly according to the invention arise from the following description in an analogous manner.

In a first phase, a so called construction phase, the generator assembly is assembled and brought to a convenient location. During the construction phase the at least one gas turbine, the fuel-inlet, the transfer means and the at least one heat exchanger are arranged inside the skid. By the end of the construction phase, the generator assembly is ready for operation and just needs to be connected to appropriate fuel supply means. This generator assembly can especially be pre-assembled, before it is delivered to the corresponding location. Thus, the already assembled generator assembly can be delivered to the corresponding site, such that minimal connections are required to be made once the generator assembly is delivered.

During a second phase, a so called operating phase, the generator assembly is brought into service at that location. During the operating phase the generator assembly is connected with supply means storing liquefied fuel gas via the fuel-inlet. Liquefied fuel gas is transferred from the fuel-inlet to the at least one gas turbine via the transfer means. Heat produced by the at least one gas turbine is transferred to the liquefied fuel gas inside the transfer means in a way that the liquefied fuel gas is vaporised.

### Advantages of the invention

The generator assembly according to the invention is especially constructed as a self-contained system, i.e. especially all components of the generator assembly are arranged inside this skid. In order to operate the generator assembly, it just has to be connected with appropriate fuel supply means, e.g. a tank in which e.g. liquefied fuel gas is stored. For operation of the generator assembly it is not necessary to connect the generator assembly with any other components or to install any other component inside the skid.

It should be understood that further components for operation of the generator assembly can conveniently be arranged inside the skid, especially valves (for example check valves, ball valves, three-way-valves), vents, couplings, as well as further pipes, tubes and/or hoses.

The generator assembly constitutes a compact system, which can easily and quickly be installed and brought into service at any convenient location. Preferably, the dimensions of the skid are between 5 m and 15 m in length, between 1 m and 5 m in width, and between 1 m and 5 m in height. Preferably, the skid is dimensioned like a standardised freight container (ISO container), especially according to standards ISO 668:2013 or ISO 1496-1:2013. The dimensions of the skid are essentially or exactly the dimensions of a 20 ft freight container, especially a length of essentially 19.88 ft (or 6.05 m, respectively), a width of essentially or exactly 8 ft (or 2.44 m, respectively), and a height of essentially or exactly 8.5 ft or (2.59 m, respectively). The dimensions of the skid can also be essentially or exactly the dimensions of a 40 ft freight container, especially a length of essentially or exactly 40 ft (or 12.19 m, respectively), a width of essentially or exactly 8 ft (or 2.44 m, respectively), and a height of essentially or exactly 8.5 ft or (2.59 m, respectively).

By this compact design, the generator assembly can easily be transported between different locations. Costs, especially equipment costs, transport costs, and installation costs, can be reduced. Moreover modularity can be achieved. Heat exchangers and/or gas turbines can easily be installed in the skid or removed out of the skid. Thus, the power output of the generator assembly can flexibly be adapted, depending on given requirements.

By integrating heat exchangers inside the skid it can be achieved that the gas turbines are supplied with vaporised natural gas, which is fed into the generator assembly in its liquid phase. It is not necessary to use vaporisers in order to vaporise the liquefied fuel gas and to feed the generator with fuel gas in its gaseous phase. Problems and disadvantages arising from the use of vaporisers can be overcome.

One particular problem of using vaporisers, which is overcome by the invention, is the building up of ice, which can cause liquid or cold gas carryover and impair function of the gas turbine(s). By the building up of ice the danger arises that liquefied fuel gas cannot be vaporised sufficiently and that cold gas or even liquid gas is fed into the gas turbine. Thus, in generator assemblies according to the prior art usually at least two vaporisers are used and are operated in turns. A single vaporiser can not be operated continuously. The vaporiser, which is operated, fuels the gas turbine, while built up ice on the other vaporiser, which is not operated, is allowed to be removed.

Heat exchangers used in the generator assembly according to the invention can be operated continuously. Moreover, the generator assembly can also be operated with a single heat exchanger if requested. By the use of heat exchangers according to the invention, the generator assembly can be operated with lower costs and more effective than with vaporisers. Furthermore, heat exchangers require less space than corresponding vaporisers and can be compactly arranged inside the skid, whereas installing vaporisers inside a skid can be problematic, expensive, and requires a significant amount of space especially in order to ensure an appropriate air flow.

Heat exchangers of the specific kind used by the present invention are operable independent of climate conditions and are equally suitable for the use in different locations with different climate conditions. Thus, the generator assembly according to the invention can be operated at different locations without changes due to changing climate conditions. In contrast to that, vaporisers need to be specifically constructed according to climate conditions.

The generator assembly according to the invention can be used for a multitude of convenient applications, for example for offshore power generation, e.g. power generation for offshore fish farming. For this purpose, the generator assembly can be transported to the appropriate location via a barge or can even be mounted and operated on a barge. The generator assembly can also be used for power generation at mine sites, especially at isolated mines, at which power supply by a power grid is expensive. The generator assembly can furthermore be used as for temporary power requirements or as an emergency power aggregate.

Gas, especially natural gas as fuel for gas turbines is much cheaper than for example diesel. Thus, operation costs of the generator assembly can be reduced. Maintenance intervals of natural gas fuelled gas turbines can be significantly increased compared to maintenance intervals of diesel fuelled gas turbines. Moreover, gas turbines fuelled by fuel gas are at least almost oil-free and produce less carbon emissions. Thus, the generator assembly is more environmentally friendly than for example generators with diesel fuelled gas turbines. The generator assembly according to the invention can thus be used for applications with strict environmental regulations.

The at least one heat exchanger is arranged inside the skid preferably in a way that the heat produced by the at least one gas turbine is transferred to the liquefied fuel gas inside the transfer means such that the liquefied fuel gas inside the transfer means is advantageously vaporised. The vaporised fuel gas is especially used to control pneumatically operated valves of the generator assembly arranged inside the skid.

Preferably, the at least one heat exchanger is arranged inside the skid in a way that the vaporised fuel gas is heated to a temperature between 0°C and 50°C. Exhaust gases exit the gas turbines with temperatures typically around 300°C. The heat exchangers are constructed and arranged at specific locations inside the skid such that a desired temperature of the vaporised fuel gas can be guaranteed. A temperature monitoring element can be provided inside the skid, by which a specific action is executed if the temperature of the vaporised fuel gas comes below a predetermined limiting value, e.g. 0°C. As such an action a warning can be issued or the generator assembly can be deactivated.

Advantageously, a temperature control valve is arranged between an exhaust of the at least one gas turbine and the at least one heat exchanger and is adapted to regulate the temperature of the vaporised fuel gas. The temperature control valve is particularly constructed as a three-way-valve. By this temperature control valve a desired amount of waste gas can be transferred from the at least one gas turbine to the at least one heat exchanger. This desired amount of waste gas is especially taken from a waste gas flow from the exhaust of the at least one gas turbine to a vent. Depending on that amount of waste gas the heat transferred from the at least one gas turbine to the transfer means and to the liquefied fuel gas inside the transfer means can be varied. Thus, the temperature of the vaporised fuel gas fed into the at least one gas turbine can be regulated.

By the temperature control valve, which is preferably arranged inside the skid, especially by its valve position, the temperature of the vaporised fuel gas is regulated.

The temperature control valve is especially integrated into a control loop, especially into a PID (proportional-integral-derivative) control loop. The desired temperature of the vaporised fuel gas fed into the at least one gas turbine is used as set-point, the current temperature of the vaporised fuel gas is used as process variable, and the valve position is determined as manipulated variable.

Moreover, by the temperature control valve a pressure drop in the at least one heat exchanger, especially in the hot side of the at least one heat exchanger can be minimised. Thus, it can be prevented that back pressure chokes the exhaust flow from the exhaust of the at least one gas turbine to the corresponding vent and the efficiency of the at least one gas turbine can be increased.

Preferably, a differential pressure switch is arranged preferably also inside the skid and across the at least one heat exchanger and is connected with a suction fan. The suction fan is preferably connected to the waste gas pipe downstream of the at least one heat exchanger. The waste gas pipe is especially connected with a vent downstream of the suction fan. The differential pressure switch is especially adapted to activate and control the suction fan, if a pressure reaches a predetermined limit. The differential pressure switch is especially adapted to determine a pressure difference between a first pressure of waste gas before being transferred to the at least one heat exchanger and a second pressure of waste gas after being transferred through the at least one heat exchanger. If that pressure difference reaches the predetermined limit, especially 2 kPa, the suction fan is activated and controlled by the differential pressure switch. By the suction fan waste gas is especially transferred away from the at least one heat exchanger to the vent. Also by the differential pressure and the suction fan a pressure drop in the at least one heat exchanger can be minimised.

According to a preferred embodiment of the invention, the generator assembly comprises a start-up reservoir arranged inside the skid for storing fuel gas, especially in its gaseous phase. The start-up reservoir is adapted to fuel the at least one gas turbine when starting the generator assembly. Since the at least heat exchanger can vaporise liquefied fuel gas only when the at least one gas turbine produces an adequate amount of exhaust gas, the start-up reservoir is used to fuel the at least one gas turbine when starting the generator assembly until they produce said adequate amount of exhaust gas. Starting of the generator assembly can especially endure up to ten seconds. After the starting of the generator assembly the at least one gas turbine is fuelled by the vaporised fuel gas in the transfer means. Said vaporised fuel gas in the transfer means can especially be used to refill the start-up reservoir.

The generator assembly advantageously comprises a control unit adapted to control operation of the generator assembly. The control unit is preferably constructed as a programmable logic controller (PLC). The control unit is especially adapted to conduct the steps of the method according to the invention during the operation phase. The control unit is preferably adapted to regulate the temperature of the vaporised fuel gas and is advantageously integrated in the corresponding PID-loop.

It should be noted that the previously mentioned features and the features to be further described in the following are usable not only in the respectively indicated combination, but also in further combinations or taken alone, without departing from the scope of the present invention.

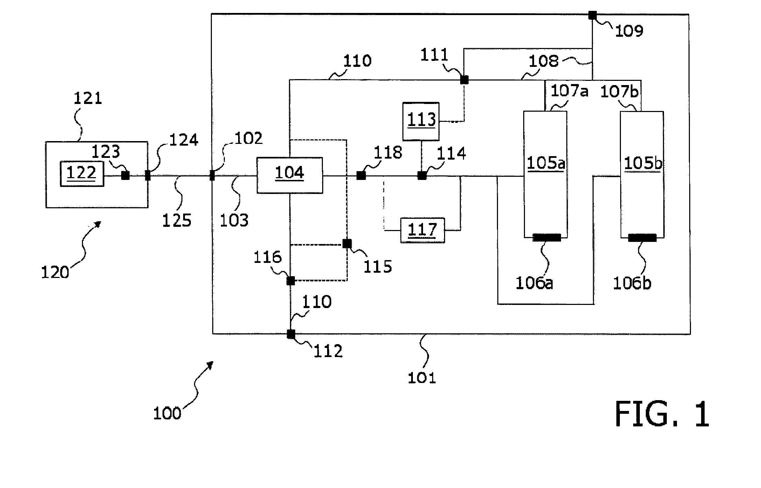

The present invention will now be described further, by way of example, with reference to the accompanying drawings, in which
- FIG. 1: schematically shows a generator assembly according to a preferred embodiment of the invention.

### Detailed description

In FIG. 1 a generator assembly 100 according to a preferred embodiment of the invention is shown. The generator assembly 100 comprises a skid 101, inside which all the components of the generator assembly 100 apart from fuel supply means are arranged. The skid 101 is for example constructed as a framework made of steel bars.

The skid 101 is particularly dimensioned like a 40 ft freight container, with a length of 40 ft (or 12.19 m, respectively), a width of 8 ft (or 2.44 m, respectively), and a height of 8.5 ft or (2.59 m, respectively).

The generator assembly 100 and the skid 101, respectively, comprise a fuel-inlet 102. By the fuel-inlet the generator assembly 100 and the skid 101, respectively, can be connected with supply means 120 storing liquefied fuel gas, particularly liquefied natural gas.

Supply means 120 can for example also comprise a skid 121, inside which a tank, e.g. a isotainer or bullet tank 122, is arranged. Liquefied natural gas is stored inside the bullet tank 122, for example at temperatures around -130°C. The supply means 120 and the skid 121, respectively, can comprise a fuel-outlet 124. The fuel-outlet 124 and the fuel-inlet 102 of the generator assembly can be connected e.g. by a hose 125. By valves and other appropriate components 123 a flow of liquefied natural gas from the bullet tank 122 to the generator assembly 100 can be controlled.

The generator assembly 100 further comprises transfer means 103 arranged inside the skid 101, especially embodied as pipes. The transfer means 103 or pipes 103, respectively, connect the fuel-inlet 102 with gas turbines also arranged inside the skid. The generator assembly 100 depicted in FIG. 1 comprises exemplarily two gas turbines 105a and 105b, each constructed as a micro turbine adapted to produce power of for instance 65 kW.

Each gas turbine 105a and 105b comprises a compressor, a combustion chamber and a turbine. Air is sucked into the compressor of the corresponding gas turbine 105a or 105b through an air-inlet 106a and 106b, respectively. Waste gases leave the corresponding gas turbine 105a or 105b through a turbine exhaust 107a and 107b, respectively. An exhaust pipe 108 connects the turbine exhausts 107a and 107b with a vent 109 in order to emit the waste gases into the atmosphere. Each gas turbine 105a and 105b, respectively, produce waste gas of especially up to 0.49 kg/s with a temperature between 270°C and 300°C.

The gas turbines 105a and 105b are adapted to be by fuelled by fuel gas, particularly by natural gas. The natural gas has to be fed in its gaseous phase into the gas turbines 105a and 105b, especially into their respective combustion chamber. In order to bring the natural gas, which is supplied to the generator assembly at the fuel-inlet in its liquid phase, into its gaseous phase, the heat exchanger 104 is arranged inside the skid in a way that the heat produced by the at gas turbines 105a and 105b is transferred to the liquefied natural gas inside the pipe 103 and that the liquefied natural gas inside the pipe 103 is vaporised.

Fur this purpose a waste gas pipe 110 connects the exhaust pipe 108 with the heat exchanger 104. A temperature control valve 111 in form of a three-way-valve is arranged in the waste gas pipe 110. By controlling the three-way-valve 111 a desired amount of waste gas can be taken from the waste gas flow inside the exhaust pipe 108 and delivered to the heat exchanger 104 via the waste gas pipe 110. That amount of waste gas is transferred through the heat exchanger 104 and emitted through a vent 112 into the atmosphere. The other part of waste gas is emitted through a vent 109.

By the heat exchanger 104 heat is transferred from that amount of waste gas to the liquefied natural gas inside the pipe 103 so that the liquefied natural gas is vaporised. In order to guarantee that the vaporised natural gas fed into the gas turbines 105a and 150b at a desired temperature, the temperature of the vaporised natural gas is regulated. The desired temperature is preferably in the range between 0°C and 50°C and is especially 10°C.

A control unit 113, preferably in form of a programmable logic controller (PLC), is adapted to control operation of the generator assembly 100. The PLC 113 is especially adapted to regulate the temperature of the vaporised natural gas, especially by a PID (proportional-integral-derivative) control loop.

Fur this purpose a temperature sensor 114 is arranged in the pipe 103 between the heat exchanger 104 and the gas turbines 105a and 105b, determining the actual value of the temperature of the vaporised natural gas. The temperature sensor 114 is connected with the PLC 113. The PLC 113 is moreover adapted to control the three-way-valve 111 based on the determined actual value of the temperature of the vaporised natural gas. Thus, by varying the valve position of the three-way-valve 111 in the course of the PID control loop, the current temperature of the vaporised fuel gas is regulated to a desired temperature.

Moreover, a differential pressure switch 115 is arranged across the heat exchanger 104. By the differential pressure switch 115 a pressure difference between a first pressure in the waste gas pipe 110 and a second pressure in the waste gas pipe 110 is determined. The first pressure is determined at a convenient location between the three-way-valve 111 and the heat exchanger 104. The second pressure is determined at a convenient location between the heat exchanger 104 and the vent 112.

The differential pressure switch 115 is connected with a suction fan 116 in the waste gas pipe 100 downstream of the heat exchanger 104. If the determined pressure difference reaches a predetermined limit of 2 kPa, the differential pressure switch 115 activates and controls the suction fan 116. Thus, a pressure drop in the heat exchanger 104 can be minimised.

When the generator assembly 100 is started, there is no waste gas yet in order to vaporise liquefied natural gas in the pipe 103. Thus, during starting of the generator assembly 100, the gas turbines 105a and 105b are fuelled by a start-up reservoir 117 storing natural gas in its gaseous phase until they produce an adequate amount of exhaust gas in order to vaporise liquefied natural gas in the pipe 103 sufficiently.

A valve 118, e.g. ball valve, can be provided in the pipe 103. During starting of the generator assembly 100, the ball valve 118 is closed so that no liquefied natural gas can get to the gas turbines 105a and 105b. When the gas turbines 105a and 105b produce an adequate amount of exhaust gas, the ball valve 118 is opened. Vaporised natural gas can also be transferred through the start-up reservoir 117 during normal operation of the generator assembly 100 thus refilling the start-up reservoir 117.

Particularly, the valves 123 of the supply means can also be connected with the PLC 113. Thus, the PLC 113 can preferably control the valves 123 and thus the flow of liquefied natural gas from the bullet tank 122 to the generator assembly 100.

### Reference list

- 100: generator assembly
- 101: skid, framework
- 102: fuel-inlet
- 103: transfer means, pipes
- 104: heat exchanger
- 105a: gas turbine, micro turbine
- 105b: gas turbine, micro turbine
- 106a: air-inlet
- 106b: air-inlet
- 107a: turbine exhaust
- 107b: turbine exhaust
- 108: exhaust pipe
- 109: vent
- 110: waste gas pipe
- 111: temperature control valve, three-way-valve
- 112: vent
- 113: control unit, programmable logic controller
- 114: temperature sensor
- 115: differential pressure switch
- 116: suction fan
- 117: start-up reservoir
- 118: valve, ball valve
- 120: supply means
- 121: skid
- 122: tank, bullet tank
- 123: valves
- 124: fuel-outlet
- 125: hose

## Claims

1. Generator assembly (100), comprising
- a skid (101) inside which components of the generator assembly (100) are arranged,
- at least one gas turbine (105a, 105b) arranged inside the skid (101) adapted to be fuelled by fuel gas, especially natural gas,
- a fuel-inlet (102) adapted to connect the generator assembly (100) with supply means (120) storing liquefied fuel gas,
- transfer means (103) arranged inside the skid (101) connecting the fuel-inlet (102) with the at least one gas turbine (105a, 105b),
- at least one heat exchanger (104) arranged inside the skid (101) in a way that heat produced by the at least one gas turbine (105a, 105b) is transferred to the transfer means (103).

2. The generator assembly (100) according to claim 1, wherein the at least one heat exchanger (104) is arranged inside the skid (101) in a way that the heat produced by the at least one gas turbine (105a, 105b) is transferred to the liquefied fuel gas inside the transfer means (103) such that the liquefied fuel gas inside the transfer means (103) is vaporised.

3. The generator assembly (100) according to claim 2, wherein the at least one heat exchanger (104) is arranged inside the skid (101) in a way that the vaporised fuel gas is heated to a temperature between 0°C and 50°C.

4. The generator assembly (100) according to claim 2 or 3, wherein a temperature control valve (111) is arranged between an exhaust (107a, 107b) of the at least one gas turbine (105a, 105b) and the at least one heat exchanger (104) and is adapted to regulate the temperature of the vaporised fuel gas.

5. The generator assembly (100) according to any one of the previous claims, wherein a differential pressure switch (115) is arranged across the at least one heat exchanger (104) and is connected with a suction fan (116), which is connected to a waste gas pipe (110) downstream of the at least one heat exchanger (104).

6. The generator assembly (100) according to any one of the previous claims, comprising a start-up reservoir (117) being arranged inside the skid (101) for storing fuel gas.

7. The generator assembly (100) according to any one of the previous claims, further comprising a control unit (113), especially a programmable logic controller adapted to control operation of the generator assembly (100).

8. The generator assembly (100) according to any one of the previous claims, wherein the dimensions of the skid are between 5 m and 15 m in length, between 1 m and 5 m in width, and between 1 m and 5 m in height.

9. Method of operating a generator assembly (100) according to any one of the previous claims, wherein during a construction phase:
- the at least one gas turbine (105a, 105b), the fuel-inlet (102), the transfer means (103) and the at least one heat exchanger (104) are arranged inside the skid (101); and/or
wherein during an operating phase:
- the generator assembly (100) is connected with supply means (120) storing liquefied fuel gas via the fuel-inlet (102);
- liquefied fuel gas is transferred from the fuel-inlet (102) to the at least one gas turbine (105a, 105b) via the transfer means (103);
- heat produced by the at least one gas turbine (105a, 105b) is transferred to the liquefied fuel gas inside the transfer means (103) by the at least one heat exchanger (104) in a way that the liquefied fuel gas inside the transfer means (103) is vaporised.

10. The method according to claim 9, wherein the temperature of the vaporised fuel gas is regulated, especially between 0°C and 50°C.
